# EUROPEAN PATENT SPECIFICATION

(11) **EP 1 364 723 B1**
(45) Date of publication and mention of the grant of the patent: **26.10.2005**
(21) Application number: 03252791.3
(22) Date of filing: 02.05.2003
(51) Int. Cl.: B21B 1/18

(54) **Method and device for uninterrupted continous rolling of bar and rod products**
Verfahren und Vorrichtung zum ununterbrochenen kontinuierlichen Walzen von Stab- und Stangen- Produkten
Méthode et dispositif pour le laminage en continue sans interruption des barres et des tiges

(30) Priority: 08.05.2002 US 378757 P; 28.04.2003 US 424503
(43) Date of publication of application: 26.11.2003
(73) Proprietor: MORGAN CONSTRUCTION COMPANY, Worcester Massachusetts 01605 (US)
(72) Inventor: Shore, T. Michael, Princeton, MA 01541 (US); Puchovski, Melicher, Dudley, MA 01571 (US)
(74) Representative: Shindler, Nigel

(56) References cited:
- DE-A- 4 323 837
- US-A- 5 767 475
- US-A1- 2001 015 367

## Description

### 1. Field of the Invention

This invention relates generally to the production of bar and rod products in continuous rolling mills by hot rolling discrete billets through roughing, intermediate and finishing mill sections, and is concerned in particular with a method and apparatus for the end-to-end welding of separate product lengths at a selected location along the rolling line, thereby making it possible to continue rolling uninterruptedly throughout the remainder of the mill.

A method and an apparatus according to the preambles of claim 1 and claim 5 respectively are e.g. known from US- A 5 767 475.

### 2. Description of the Prior Art

In conventional bar and rod rolling mills currently in operation, the accepted practice is to begin the process with individual billets that are heated in a furnace and then discharged for separate rolling into product lengths having reduced cross sectional areas and front and tail ends. A number of drawbacks are associated with this practice. For example, the gap time between billets can account for as much as 10% lost production time.

Also, the front and tail ends of each product length are dimensionally and/or metallurgically unacceptable and must therefore be trimmed and discarded, resulting in considerable scrap losses. The front ends are also prone to cobbling, particularly at the higher speeds reached in the finishing section of the mill.

In an effort at avoiding these problems, and as disclosed for example in US-A5767475 and US-A2001/0015367, technology has been developed to weld the billets end-to-end before they are introduced in the mill. However, this too has proven to be somewhat problematical. Welding of the large billet cross sections requires massive equipment and a heavy consumption of electrical energy. Excessive electrical energy is additionally required to inductively reheat the billet segments that have been chilled by contact with the heavy clamping devices required to force the billet ends together.

A further drawback with billet welding stems from the fact that the fused metal at the welded joint is subsequently rolled into a substantial length of the finished product. For example, when billets having a typical cross sectional area of 22,500 mm² are welded and then rolled into 5.5 mm rod, the fused metal of the welded joint will extend through approximately 94 meters of the finished product. If the billets are metallurgically dissimilar, this length may well have to be scrapped, at a considerable loss to the mill operator.

The present invention applies welding technology to the rolling process in a manner and at a location along the rolling line that avoids or at least significantly minimizes the problems and disadvantages associated with current practices.

### BRIEF DESCRIPTION OF THE DRAWINGS

Figure 1 is a plan view of one embodiment of an apparatus in accordance with the present invention.
Figures 2A - 2J are diagrammatic views showing successive stages in the operation of the apparatus depicted in Figure 1;
Figure 3 is a plan view of an alternative embodiment of an apparatus in accordance with the present invention; and
Figure 4 is an enlarged cross section taken along line 4-4 of Figure 3 and schematically depicting the stacked storage capacity of the accumulator.

### DETAILED DESCRIPTION OF PREFERRED EMBODIMENTS

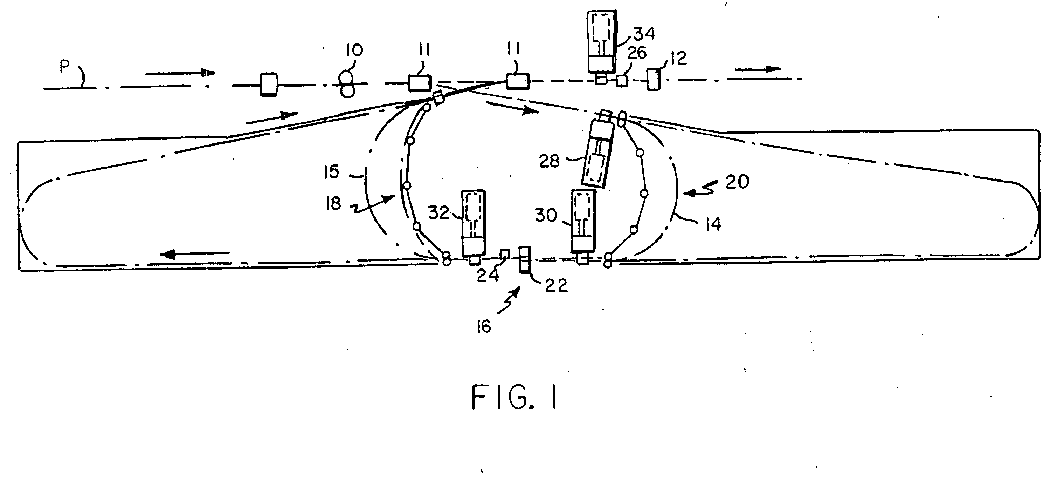

With reference initially to Figure 1, first and second vertical and horizontal roll stands 10 and 12 are shown positioned along a mill pass line "P". Roll stand 10 may, for example comprise the last roll stand of the mill's roughing section, and stand 12 may comprise the first roll stand of the mill's intermediate section. The delivery speed of roll stand 10 will exceed the take-up speed of roll stand 12. Thus, in an exemplary operation, with a mill rolling a 2000 kg billet at a rate of 150 metric tons per hour, roll stand 10 would produce a bar having a cross sectional area of 57.4 mm at a delivery speed of 2052.5 mm/sec. The take up speed of roll stand 12 would be 1642 mm/sec.

Switches 11 are arranged to direct successive product lengths exiting from roll stand 10 away from the mill pass line P and along an entry path 14 leading to a welding station 16, and from the welding station along a delivery path 15 back to the mill pass line for continued rolling in the roll stand 12 and all subsequent roll stands (not shown). Alternatively, the switches 11 may be operated to bypass the entry path 14 and to thereby allow discrete product lengths to continue along the pass line P.

A first storage means in the form of a repeater 18 is located along the delivery path 15, and a second storage means, also in the form of a repeater 20 is located along the entry path 14. The repeaters 18, 20 may be of conventional design well known to those skilled in the art.

The welding station 16 includes a welder 22 configured to weld abutting trailing and leading ends of product lengths. The welded joints are deburred by a deburring device 24 before continuing along delivery path 15. The welded joints and adjacent product segments may, if necessary, be reheated in advance of roll stand 12 by an induction heater 26. Driven pinch rolls 28, 30, 32 and 34 are strategically positioned to control the forward movement of the product lengths being processed.

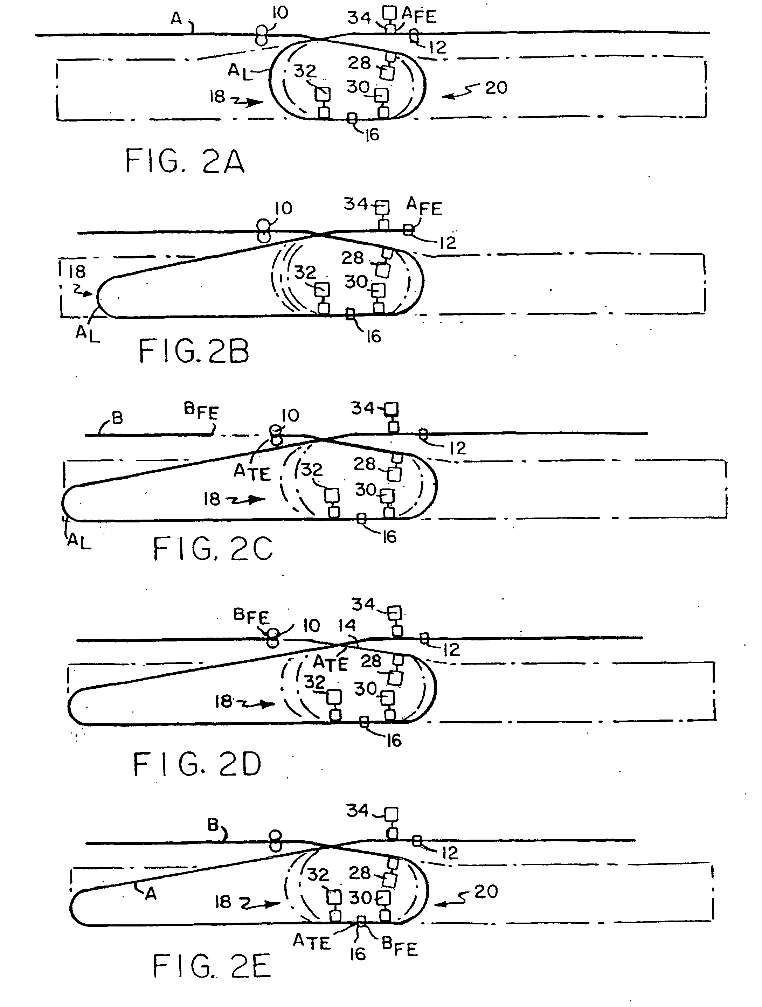

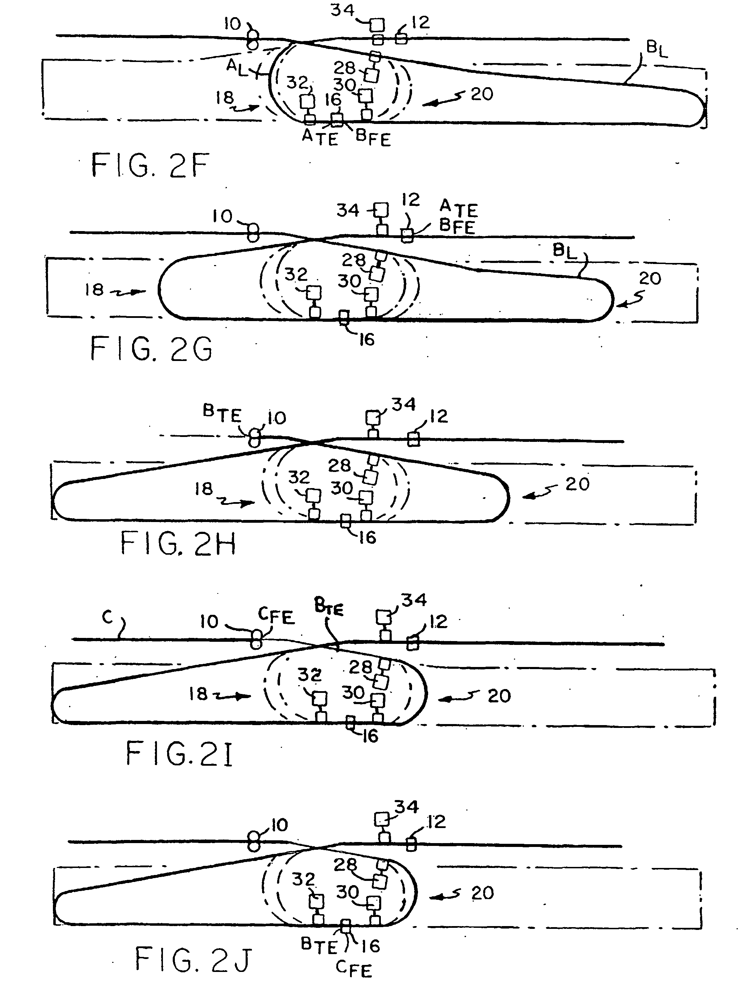

The operation of the apparatus will now be described with reference to Figures 2A-2J.

### Figure 2A

A first product length A is being rolled through roll stand 10 at a rate of 150 tons per hour and a speed of 2052.5 mm/sec. The product length A has passed along entry path 14, through the welding station 16 and along delivery path 15, and its front end A_{FE} has arrived at pinch roll unit 34 where it has been temporarily stopped. A first portion of the first product length has begun to accumulate in the form of a loop A_{L} in repeater 18.

### Figure 2B

The loop A_{L} in repeater 18 has increased considerably, and the front end A_{FE} of the first product length has now passed through pinch roll unit 34 into roll stand 12. The rolling rate of roll stand 12 is 120 tons per hour, with a take in speed of 1642 mm/sec.

### Figure 2C

The loop AL in repeater 18 has reached its maximum. The tail end A_{TE} of the first product length is just clearing roll stand 10, and the front end B_{FE} of the second product length B is approaching roll stand 10.

### Figure 2D

The tail end A_{TE} of the first product length A is now moving into the entry path 14 as the front end B_{FE} of the second product length B enters roll stand 10.

### Figure 2E

The tail end A_{TE} of the first product length A and the front end B_{FE} of the second product length B have arrived at the welding station 16 where they are held stationary in an abutting relationship by pinch roll units 32, 30. Welding of the front and tail ends begins.

### Figure 2F

While welding of the front and tail ends takes place, the loop A_{L} of the first product length in repeater 18 is gradually depleted, and the second product length B accumulates in a loop BL form in repeater 20.

### Figure 2G

The welded front and tail ends have progressed from the welding station 16 to roll stand 12, and the loop B_{L} previously accumulated in repeater 20 is now being transferred by the pinch roll units 30, 32 to repeater 18.

### Figure 2H

As transfer of the product loop B_{L} from repeater 20 to repeater 18 continues, the tail end B_{TE} of the second product length arrives at roll stand 10.

### Figure 2I

As described previously with reference to Figure 2D, the tail end B_{TE} of the second product length is now moving into the entry path 14 as the front end C_{FE} of a third product length C enters roll stand 10.

### Figure 2J

Welding of the tail end B_{TE} of the second product length to the front end CFE of the third product length has commenced, as described previously with respect to Figure 2E.

The pinch roll units 28, 30, 32 and 34 are individually driven and thus may be selectively controlled to accelerate, decelerate and stop the successive product lengths in order to effect the above described movements. Although welding is preferably accomplished with the front and tail ends arrested at station 14, alternatively, the pinch roll units 30, 32 could be operated to simply slow the front and tail ends, with the welder 22 being movable at the same speed to effect welding on the fly.

Once a lead product is fed to roll stand 12, uninterrupted rolling continues thereafter in that stand and any subsequent stands throughout the remainder of the mill.

Welding of front and tail ends with reduced cross sectional areas at station 16 can be achieved quickly, with minimum consumption of energy, and with smaller, less expensive welding equipment.

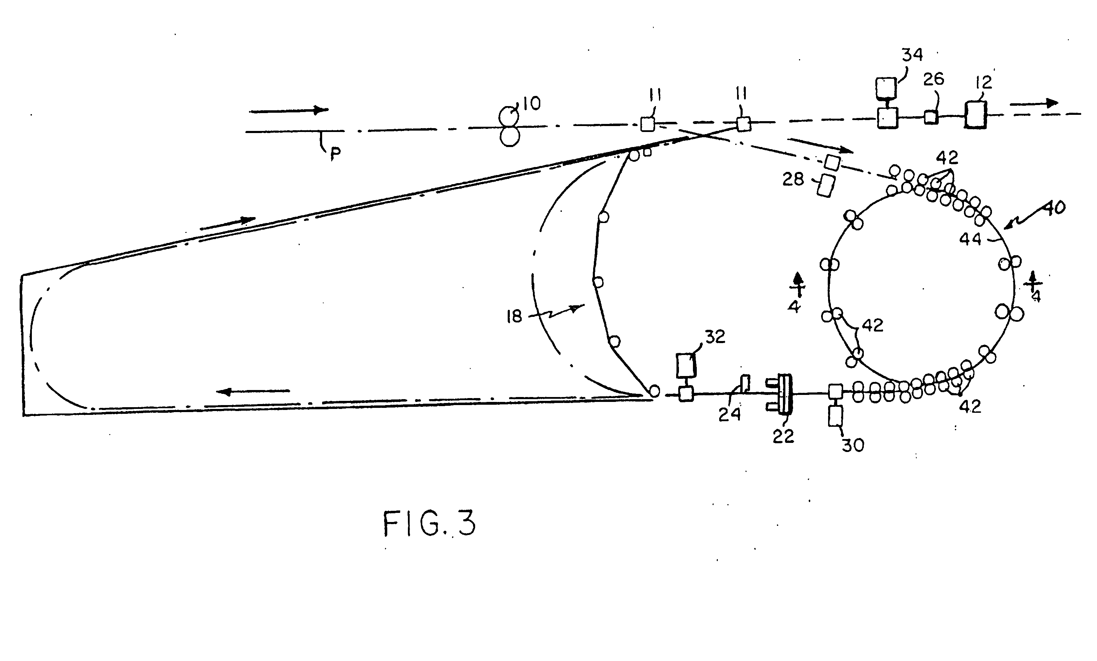

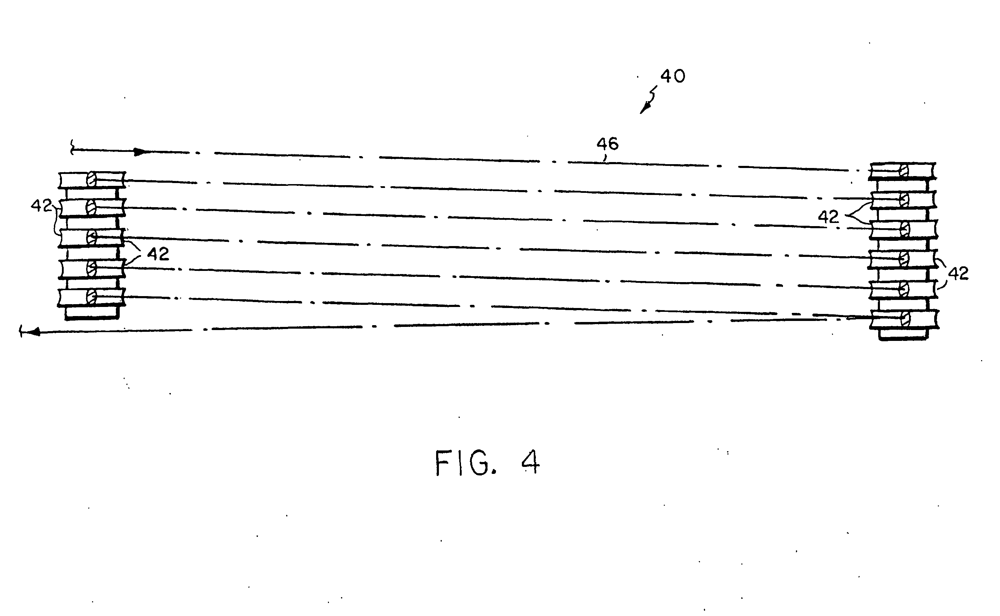

Figures 3 and 4 illustrate an alternative embodiment of the invention, where components identical to those of the Figure 1 embodiment have been identified by the same reference numerals. Here, the repeater 20 of the first embodiment has been replaced by a multilevel accumulator 40.

It will be seen from Figure 4 that the accumulator comprises vertically stacked pairs of guide rollers 42 arranged around a circular footprint 44. The guide rollers define a helical delivery path 46 configured and dimensioned to provide a product storage capacity comparable to that of the repeater 20 of the Figure 1 embodiment.

In light of the forgoing it will now be understood by those skilled in the art that the present invention operates to divert successive product lengths exiting from roll stand 10 away from the pass line P and along entry paths 14 (or 46) to the welding station 16, and from the welding station along a delivery path 15 back to the pass line for continued rolling in roll stand 12. Repeater 18 operates in conjunction with pinch roll units 32 and 34 on the delivery side of the welding station to temporarily store a first accumulation of one product length and to arrest or slow the trailing end of that product length at the welding station.

Repeater 20 (or accumulator 44) operates in conjunction with pinch roll units 28 and 30 on the entry side of the welding station to arrest or slow the leading end of the next product

## Claims

1. A method of joining the tail end (A_{TE}) of a first product length (A) to the front end (B_{FE}) of a successive second product length (B) in a continuous rolling mill in which discrete billets are rolled through a plurality of roll stands (10,12) arranged along a mill pass line "p" to produce successive product lengths (A, B) having reduced cross section areas, the successive product lengths having front (A_{FE}, B_{FE}) and tail ends (A_{TE}, B_{TE}), said method comprising the step of:
operating a first of the roll strands (10) at a delivery speed that exceeds the take up speed of a successive second roll stand (12); the method further
**characterised by** the steps of:
directing the first and second product lengths (A, B) as they exit from the first roll stand (10) away from the mill pass line "p" along an entry path (14) leading to a welding station (16) and from the welding station along a delivery path (15) leading back to the mill pass line for continued rolling in the second roll stand (12);
temporarily accumulating a first portion (A_{L}) of the first product length (A) along the delivery path (15) while rolling of the first product length (A) is taking place in the second roll stand (12);
retaining the tail end (A_{TE}) of the first product length (A) at the welding station (16) during a time interval in which the accumulated first portion (A_{L}) continues to be rolled in the second roll stand(12);
retaining the front end (B_{FE}) of the second product length (B) at the welding station (16) during said time interval, while temporarily accumulating a second portion (B_{L}) of the second product length (B) along the entry path (14);
welding the retained front and tail ends together during said time interval; and releasing the welded ends.

2. The method of claim 1 in which the welded ends are subjected to deburring before being rolled in the second roll stand (12).

3. The method of claims 1 or 2 wherein the product lengths are reheated before being rolled in the second roll stand (12).

4. The method of claim 1 wherein the said front and tail ends are arrested while being welded at the welding station (16).

5. A rolling mill in which discrete billets are rolled into successive product lengths having front and tail ends, the rolling mill including an apparatus for joining the tail end (A_{TE}) of a first product length (A) to the front end (B_{FE}) of a successive second product length (B), the rolling mill further comprising:
first (10) and second (12) roll stands arranged in succession along a mill pass line "p", the first roll stand (10) being operable at a delivery speed that exceeds the take up speed of the second roll stand (12);
**characterised by**:
guide means (11) for directing the first (A) and second (B) product lengths exiting from the first roll stand (10) away from the mill pass line "p" along an entry path (14) leading to a welding station (16) and from the welding station along a delivery path (15) leading back to the mill pass line and to the second roll stand (12);
a first storage means (18) for temporarily accumulating a first portion (A_{L}) of the first product length (A) along the delivery path (15) while rolling of the first product length (A) takes place in the second roll stand (12);
retaining means (32, 30) for retaining the tail end of the first product length and the front end of the second product length at the welding station (16) during a time interval in which the accumulated first portion of the first product length continues to be rolled in the second roll stand;
second storage means (14) for temporarily accumulating a second portion (20) of the second product length (B) along the entry path during said time interval; and
welding means (22) at said welding station (16) for welding the retained front and tail ends together, whereupon release of the thus welded front and tail ends will permit continued and uninterrupted rolling of the first and second product lengths in the second roll stand (12).

6. The rolling mill as claimed in claim 5 wherein said retaining means (30,32) is operable to arrest the front and tail ends at said welding station (16).

7. The rolling mill as claimed in claim 5 further comprising means (24) along said delivery path (15) for deburring the welded front and tail ends of said first and second product lengths.

8. The rolling mill as claimed in claim 6 or claim 7 further comprising means (26) for reheating said product lengths in advance of said second roll stand (12).

9. The rolling mill as claimed in claim 5 wherein said first storage means (18) comprises a repeater for accumulating said first portion in the form of a loop.

10. The rolling mill as claimed in claim 5 wherein said retaining means comprises driven pinch roll units (30,32) on the entry and delivery sides of said welding station (16).

11. The method of claim 1 wherein said product lengths have cross sectional areas ranging from 700 to 4400 mm².

## Patentansprüche

1. Ein Verfahren zum Verbinden des hinteren Endes (A_{TE}) einer ersten Produktlänge (A) mit dem vorderen Ende (B_{FE}) einer nachfolgenden zweiten Produktlänge (B) in einem kontinuierlichen Walzwerk, in welchem einzelne Barren durch eine Vielzahl von Walzgerüsten (10, 12), die entlang einer Walzbahn "p" des Walzwerks angeordnet sind, gewalzt werden, um aufeinander abfolgende Produktlängen (A, B) herzustellen, welche verminderte Querschnittsflächen aufweisen, wobei die aufeinander abfolgenden Produktlängen vordere (A_{FE}, B_{FE}) und hintere Enden (A_{TE}, B_{TE}) aufweisen, wobei das Verfahren die folgenden Schritte umfasst:
das Betreiben eines ersten der Walzgerüste (10) mit einer Abgabegeschwindigkeit, welche die Aufnahmegeschwindigkeit eines nachfolgenden zweiten Walzgerüstes (12) überschreitet;
das Verfahren ist ferner **gekennzeichnet durch** die folgenden Schritte:
das Leiten der ersten und zweiten Produktlängen (A, B), wenn sie aus dem ersten Walzgerüst (10) austreten, weg von der Walzbahn "p" des Walzwerks entlang einer Eintrittsbahn (14), die zu einer Schweißstation (16) führt, und von der Schweißstation entlang einer Abgabebahn (15), welche zurück zu der Walzbahn des Walzwerks führt, zum kontinuierlichen Walzen in dem zweiten Walzgerüst (12);
das temporäre Ansammeln eines ersten Bereichs (A_{L}) der ersten Produktlänge (A) entlang der Abgabebahn (15), während das Walzen der ersten Produktlänge (A) in dem zweiten Walzgerüst (12) stattfindet;
das Zurückhalten des hinteren Endes (A_{TE}) der ersten Produktlänge (A) an der Schweißstation (16), während einer Zeitspanne, in welcher der angesammelte erste Bereich (A_{L}) damit fortfährt, in dem zweiten Walzgerüst (12) gewalzt zu werden;
das Zurückhalten des vorderen Endes (B_{FE}) der zweiten Produktlänge (B) an der Schweißstation (16) während der genannten Zeitspanne, während des temporären Ansammelns eines zweiten Bereichs (B_{L}) der zweiten Produktlänge (B) entlang der Eintrittsbahn (14);
das Zusammenschweißen der zurückgehaltenen vorderen und hinteren Enden während der genannten Zeitspanne; und das Freigeben der verschweißten Enden.

2. Das Verfahren aus Anspruch 1, in welchem die verschweißten Enden einem Entgraten unterzogen werden, bevor sie in dem zweiten Walzgerüst (12) gewalzt werden.

3. Das Verfahren aus Anspruch 1 oder 2, wobei die Produktlängen angelassen werden, bevor sie in dem zweiten Walzgerüst (12) gewalzt werden.

4. Das Verfahren aus Anspruch 1, wobei die vorderen und hinteren Enden arretiert werden, während sie in der Schweißstation (16) geschweißt werden.

5. Ein Walzwerk, in welchem einzelne Barren in aufeinander abfolgende Produktlängen, welche vordere und hintere Enden aufweisen, gewalzt werden, wobei das Walzwerk eine Vorrichtung zum Verbinden des hinteren Endes (A_{TE}) einer ersten Produktlänge (A) mit dem vorderen Ende (B_{FE}) einer nachfolgenden zweiten Produktlänge (B) aufweist, wobei das Walzwerk femer umfasst:
ein erstes (10) und ein zweites (12) Walzgerüst, welche hintereinander entlang einer Walzbahn "p" des Walzwerks angeordnet sind, wobei das erste Walzgerüst (10) mit einer Abgabegeschwindigkeit betreibbar ist, welche die Aufnahmegeschwindigkeit des zweiten Walzgerüstes (12) überschreitet;
**gekennzeichnet durch**:
ein Führungsmittel (11) zum Leiten der ersten (A) und zweiten (B) Produktlängen, welche aus dem ersten Walzgerüst (10) austreten, weg von der Walzbahn "p" des Walzwerks entlang einer Eintrittsbahn (14), die zu einer Schweißstation (16) führt, und von der Schweißstation entlang einer Abgabebahn (15), die zurück zu der Walzbahn des Walzwerks und dem zweiten Walzgerüst (12) führt;
ein erstes Speicherungsmittel (18) zum temporären Ansammeln eines ersten Bereichs (A_{L}) der ersten Produktlänge (A) entlang der Abgabebahn (15), während das Walzen der ersten Produktlänge (A) in dem zweiten Walzgerüst (12) stattfindet;
ein Zurückhaltemittel (32, 30) zum Zurückhalten des hinteren Endes der ersten Produktlänge und des vorderen Endes der zweiten Produktlänge an der Schweißstation (16) während einer Zeitspanne, in welcher der angesammelte erste Bereich der ersten Produktlänge damit fortfährt, in dem zweiten Walzgerüst gewalzt zu werden;
ein zweites Speicherungsmittel (14) zum temporären Ansammeln eines zweiten Bereichs (20) der zweiten Produktlänge (B) entlang der Eintrittsbahn während der genannten Zeitspanne; und
ein Schweißmittel (22) an der genannten Schweißstation (16) zum Zusammenschweißen der zurückgehaltenen vorderen und hinteren Enden, woraufhin ein Freigeben der so zusammengeschweißten vorderen und hinteren Enden ein kontinuierliches und ununterbrochenes Walzen der ersten und zweiten Produktlängen in dem zweiten Walzgerüst (12) ermöglichen wird.

6. Das Walzwerk, wie es in Anspruch 5 beansprucht wird, in welchem das genannte Zurückhaltemittel (30, 32) derart betätigbar ist, dass es die vorderen und hinteren Enden an der genannten Schweißstation (16) arretiert.

7. Das Walzwerk, wie es in Anspruch 5 beansprucht wird, femer umfassend ein Mittel (24) entlang der genannten Abgabebahn (15) zum Entgraten der geschweißten vorderen und hinteren Enden der genannten ersten und zweiten Produktlängen.

8. Das Walzwerk, wie es in Anspruch 6 oder Anspruch 7 beansprucht wird, femer umfassend ein Mittel (26) zum Anlassen der genannten Produktlängen vor dem genannten zweiten Walzgerüst (12).

9. Das Walzwerk, wie es in Anspruch 5 beansprucht wird, in welchem das genannte erste Speicherungsmittel (18) eine Umführung zum Ansammeln des genannten ersten Bereichs in Form einer Schleife umfasst.

10. Das Walzwerk, wie es in Anspruch 5 beansprucht ist, in welchem das genannte Zurückhaltemittel angetriebene Klemmwalzeinheiten (30, 32) auf der Eintritts- und Abgabeseite der genannten Schweißstation (16) umfasst.

11. Das Verfahren aus Anspruch 1, in welchem die genannten Produktlängen Querschnittsflächen aufweisen, die von 700 bis 4400 mm² reichen.

## Revendications

1. Procédé de jonction de l'extrémité arrière (A_{TE}) d'une première longueur de produit (A) à l'extrémité avant (B_{FE}) d'une seconde longueur de produit suivante (B) dans un laminoir en continu dans lequel des billettes discrètes sont laminées au travers d'une pluralité de cages de laminage (10, 12) disposées le long d'une ligne de passage de laminoir "p" pour produire des longueurs de produits successives (A, B) ayant des surfaces en section transversale réduites, les longueurs de produits successives ayant des extrémités avant (A_{FE}, B_{FE}) et des extrémités arrière (A_{TE}, B_{TE}), ledit procédé comprenant l'étape consistant à :
mettre en oeuvre une première des cages de laminage (10) à une vitesse de délivrance qui dépasse la vitesse de réception d'une seconde cage de laminage suivante (12), le procédé étant en outre **caractérisé par** les étapes consistant à :
orienter les première et seconde longueurs de produits (A, B) lorsqu'elles sortent de la première cage de laminage (10), à l'écart de la ligne de passage de laminoir "p" le long d'un trajet d'entrée (14) conduisant à un poste de soudage (16) et du poste de soudage sur un trajet de délivrance (15) conduisant en retour à la ligne de passage de laminoir en vue d'un laminage continu dans la seconde cage de laminage (12),
accumuler temporairement une première partie (A_{L}) de la première longueur de produit (A) le long du trajet de délivrance (15) alors que le laminage de la première longueur de produit (A) a lieu dans la seconde cage de laminage (12),
retenir l'extrémité arrière (A_{TE}) de la première longueur de produit (A) au niveau du poste de soudage (16) pendant un intervalle de temps durant lequel la première partie accumulée (A_{L}) continue à être laminée dans la seconde cage de laminage (12),
retenir l'extrémité avant (B_{FE}) de la seconde longueur de produit (B) au niveau du poste de soudage (16) au cours dudit intervalle de temps, tout en accumulant temporairement une seconde partie (B_{L}) de la seconde longueur de produit (B) le long du trajet d'entrée (14),
souder les extrémités avant et arrière retenues ensemble au cours dudit intervalle de temps, et libérer les extrémités soudées.

2. Procédé selon la revendication 1, dans lequel les extrémités soudées sont soumises à un ébavurage avant d'être laminées dans la seconde cage de laminage (12).

3. Procédé selon les revendications 1 ou 2, dans lequel les longueurs de produits sont réchauffées avant d'être laminées dans la seconde cage de laminage (12).

4. Procédé selon la revendication 1, dans lequel lesdites extrémités avant et arrière sont arrêtées tout en étant soudées au poste de soudage (16).

5. Laminoir dans lequel des billettes discrètes sont laminées en longueurs de produits successives ayant des extrémités avant et arrière, le laminoir comprenant un dispositif destiné à joindre l'extrémité arrière (A_{TE}) d'une première longueur de produit (A) à l'extrémité avant (B_{FE}) une seconde longueur de produit suivante (B), le laminoir comprenant en outre :
des première (10) et seconde (12) cages de laminage agencées successivement le long d'une ligne de passage de laminoir "p", la première cage de laminage (10) pouvant être mise en oeuvre à une vitesse de délivrance qui dépasse la vitesse de réception de la seconde cage de laminage (12), **caractérisé par** :
un moyen de guidage (11) destiné à orienter les première (A) et seconde (B) longueurs de produits, qui sortent de la première cage de laminage (10) à l'écart de la ligne de passage de laminoir "p" le long d'un trajet d'entrée (14) conduisant à un poste de soudage (16) et depuis le poste de soudage le long d'un trajet de délivrance (15) conduisant en retour à la ligne de passage de laminoir et à là seconde cage de laminage (12),
un premier moyen de stockage (18) destiné à accumuler temporairement une première partie (A_{L}) de la première longueur de produit (A) le long du trajet de délivrance (15) alors que le laminage de la première longueur de produit (A) a lieu dans la seconde cage de laminage (12),
un moyen de retenue (32, 30) destiné à retenir l'extrémité arrière de la première longueur de produit et l'extrémité avant de la seconde longueur de produit au niveau du poste de soudage (16) pendant un intervalle de temps au cours duquel la première partie accumulée de la première longueur de produit continue à être laminée dans la seconde cage de laminage,
un second moyen de stockage (14) destiné à accumuler temporairement une seconde partie (20) de la seconde longueur de produit (B) le long du trajet d'entrée au cours dudit intervalle de temps, et
un moyen de soudage (22) au niveau dudit poste de soudage (16) destiné à souder ensemble les extrémités avant et arrière retenues, après quoi la libération des extrémités avant et arrière ainsi soudées permettra un laminage continu et ininterrompu des première et seconde longueurs de produits dans la seconde cage de laminage (12).

6. Laminoir selon la revendication 5, dans lequel ledit moyen de retenue (30, 32) peut être mis en oeuvre pour arrêter les extrémités avant et arrière audit poste de soudage (16).

7. Laminoir selon la revendication 5, comprenant en outre un moyen (24) le long dudit trajet de délivrance (15) destiné à ébavurer les extrémités avant et arrière soudées desdites première et seconde longueurs de produits.

8. Laminoir selon la revendication 6 ou la revendication 7, comprenant en outre un moyen (26) destiné à chauffer lesdites longueurs de produits avant ladite seconde cage de laminage (12).

9. Laminoir selon la revendication 5, dans lequel ledit premier moyen de stockage (18) comprend une doubleuse destinée à accumuler ladite première partie sous la forme d'une boucle.

10. Laminoir selon la revendication 5, dans lequel ledit moyen de retenue comprend des unités de rouleaux de pincement entraînés (30, 32) sur les côtés entrée et délivrance dudit poste de soudage (16).

11. Procédé selon la revendication 1, dans lequel lesdites longueurs de produits présentent des surfaces en section transversale allant de 700 à 4 400 mm².
